# EUROPÄISCHE PATENTANMELDUNG

(11) **EP 3 640 008 A1**
(43) Veröffentlichungstag der Anmeldung: **22.04.2020**
(21) Anmeldenummer: 18201045.4
(22) Anmeldetag: 17.10.2018
(51) Int. Cl.: B29C 64/227, B33Y 30/00, B33Y 40/00

(54) **3D-DRUCKER, BEI DEM EIN BEWEGLICHER MECHANISMUS FÜR DIE REDUKTION VON SCHWINGUNGEN SORGT**

(71) Anmelder: BASF SE, 67056 Ludwigshafen am Rhein (DE)
(72) Erfinder: Die Erfindernennung liegt noch nicht vor
(74) Vertreter: Ellwanger, Arndt

(57) **Zusammenfassung**

3D (dreidimensionaler)-Drucker, der mindestens einen Druckkopf sowie mindestens ein Gegengewicht umfasst. In dem 3D-Drucker werden das Gegengewicht und der Druckkopf spiegelbildlich zueinander innerhalb des Druckergehäuses bewegt. Weiterhin betrifft die vorliegende Erfindung die Verwendung eines solchen 3D-Druckers in einem 3D-Druckverfahren zur Herstellung eines beliebigen 3D-Druckproduktes bzw. ein entsprechendes Herstellungsverfahren eines solchen 3D-Druckproduktes. Die 3D-Drucker bzw. die entsprechenden Herstellungsverfahren eignen sich bevorzugt im Zusammenhang mit 3D-Extrusionsdruckverfahren, insbesondere im Rahmen eines 3D-Schmelzschichtdruckverfahrens (FDM-3D-Drucktechnik).

## Beschreibung

Die vorliegende Erfindung betrifft einen 3D (dreidimensionalen)-Drucker, der mindestens einen Druckkopf sowie mindestens ein Gegengewicht umfasst. In dem 3D-Drucker werden das Gegengewicht und der Druckkopf spiegelbildlich zueinander innerhalb des Druckergehäuses bewegt.

Weiterhin betrifft die vorliegende Erfindung die Verwendung eines solchen 3D-Druckers in einem 3D-Druckverfahren zur Herstellung eines beliebigen 3D-Druckproduktes bzw. ein entsprechendes Herstellungsverfahren eines solchen 3D-Druckproduktes. Die erfindungsgemäßen 3D-Drucker bzw. die entsprechenden Herstellungsverfahren eignen sich bevorzugt im Zusammenhang mit 3D-Extrusionsdruckverfahren, insbesondere im Rahmen eines 3D-Schmelzschichtdruckverfahrens (FDM-3D-Drucktechnik).

Der 3D-Druck als solcher ist mittlerweile ein weitverbreitetes Verfahren, bei dem prinzipiell ein geeignetes Ausgangsmaterial Schicht für Schicht aufgetragen und so dreidimensionale (3D) Gegenstände (auch als Werkstücke oder 3D-Druckprodukt bezeichnet) in zahllosen Variationen hinsichtlich Geometrie, Form, Größe und/oder Gestalt erzeugt werden können. Im Rahmen des 3D-Drucks sind mittlerweile mehrere unterschiedliche Arten/Techniken von 3D-Druckverfahren bekannt, wie beispielsweise selektives Laserschmelzen, Elektronenstrahlschmelzen, selektives Lasersintern, Stereolithographie oder das Fused Deposition Modeling (FDM)-Verfahren. Die vorgenannten Verfahren als solche sind dem Fachmann allesamt bekannt, sie unterscheiden sich insbesondere hinsichtlich des Einsatzes der spezifischen Ausgangsstoffe und/oder der speziellen Verfahrensbedingungen, mit denen die Ausgangsstoffe in das gewünschte 3D-Produkt verwandelt werden (beispielsweise Verwendung spezieller Laser, Elektronenstrahlen oder spezieller Aufschmelz-/Extrusionstechniken). Häufig sind die kommerziell erhältlichen 3D-Drucker auf das gewünschte 3D-Druckverfahren abgestimmt. Dies bedeutet, dass ein beliebiger 3D-Drucker nicht automatisch für jedes 3D-Druckverfahren eingesetzt werden kann, weil beispielsweise zur Durchführung eines selektiven Lasersinterverfahrens (SLS-Verfahren) zwingend die Verwendung eines geeigneten Lasers im Zusammenhang mit dem eingesetzten 3D-Drucker erforderlich ist.

Insbesondere aufgrund ihrer relativ niedrigen Kosten sind 3D-Extrusionsverfahren in der Praxis sehr weit verbreitet. Dies gilt insbesondere für das sogenannte 3D-Schmelzschichtdruckverfahren, das auch als Fused Deposition Modeling (FDM)-Verfahren bzw. Fused Filament Fabrication (FFF)-Verfahren bezeichnet wird.

DE 690 33 809 T2 (basierend auf der US-Priorität 429012 von 1989) ist eines der ersten Patente, das ein Gerät und Verfahren zum Erzeugen dreidimensionaler Objekte auf Basis des FDM-Verfahrens beschreibt. Darin wird eine Vorrichtung sowie ein zugehöriges Verfahren zum Bilden eines dreidimensionalen Objektes mit einer vorbestimmten Konstruktion offenbart, wobei insbesondere ein Modell oder Gegenstand durch die Ablagerung mehrerer Lagen eines Materials in einem fluiden Zustand auf einen Träger hergestellt wird. Das Material wird so ausgewählt und seine Temperatur wird so gesteuert, dass es sich im Wesentlichen sofort nach dem Extrudieren oder der Abgabe auf einen Träger beim Aufbau der mehreren Lagen, die den gewünschten Gegenstand bilden, verfestigt. Wie insbesondere aus den Figuren sowie der zugehörigen Figurenbeschreibung dieses Dokumentes ersichtlich, ist bei den darin offenbarten Vorrichtungen der Druckkopf nur in Z-Richtung (bezogen auf ein kartesisches Koordinatensystem) beweglich, während er hingegen in X- und Y-Richtung fest ist. Die dreidimensionale Form des dabei hergestellten 3D-Produktes wird dadurch erzielt, dass die Basisplatte, die das 3D-Produkt während des Herstellungsprozesses aufnimmt, in X- und Y-Richtung unter Verwendung eines Antriebssystems, das mehrere Motoren umfasst, beweglich gehalten wird. Die vertikale Bewegung des Druckkopfes in Z-Richtung wird durch ein separates Antriebssystem gesteuert.

DE 10 2015 111 677 A1 offenbart eine 3D-Druckvorrichtung mit einer beheizbaren Kammer, in welcher dreidimensionale Modelle gedruckt werden. In der beheizbaren Kammer ist eine Grundplatte angeordnet, auf der die 3D-Modelle gedruckt werden. Weiterhin enthält die 3D-Druckvorrichtung wenigstens einen Druckkopf und wenigstens zwei Antriebseinheiten zur Veränderung der Position des Druckkopfes in einer parallel zur Grundplatte verlaufenden Ebene. Die 3D-Druckvorrichtung ist dadurch gekennzeichnet, dass wenigstens eine Antriebseinheit durch eine in dieser Ebene rotierbare Isolierung von der beheizbaren Kammer getrennt ist. Diese 3D-Druckvorrichtungen eignen sich insbesondere zum Einsatz in 3D-Schmelzschicht-Herstellungsverfahren, also FDM-3D-Drucktechniken.

Ein weiterer 3D-Drucker zum Einsatz in FDM-3D-Druckverfahren wird in US 2018/0056608 A1 beschrieben. Die darin beschriebenen 3D-Drucker enthalten eine Druckkopfeinheit, die den Druckkopf als solchen inklusive der Extrusionsdüse umfassen, und darüber hinaus eine zusätzliche Vorrichtungseinheit. Diese zusätzliche Vorrichtungseinheit, die mit dem Druckkopf als solchem verschmolzen ist, kann variabel gestaltet werden, beispielsweise können dort ein Gebläse, eine Lichteinheit, ein Sensor oder ein Laser enthalten sein. Die Druckkopfeinheit wird mit Hilfe einer Antriebseinheit in der XY-Ebene bewegt, während das 3D-Druckprodukt schichtweise auf einer Platte aufgebaut wird, die mit Hilfe eines Bewegungsmechanismus in Z-Richtung beweglich ist. Im Rahmen einer anderen Ausführungsform können diese Bewegungsrichtungen jedoch vertauscht sein. Die Platte zur Aufnahme des 3D-Produktes kann dort in einer XY-Ebene bewegt werden, während die Druckkopfeinheit entlang der Z-Richtung bewegt wird.

WO 2017/009190 betrifft ein spezielles Filament, das ein Kernmaterial enthält, das wiederum mit einer Ummantelungsschicht umgeben ist. Das Kernmaterial umfasst ein anorganisches Pulver sowie ein Polymer als Binder. Die Ummantelung enthält zu mindestens 75 Vol.-% mindestens ein thermoplastisches Polymer. Diese speziellen Filamente werden durch Coextrusion des Kernmaterials und des Ummantelungsmaterials hergestellt. Diese Filamente werden insbesondere im Rahmen eines FFF-3D-Druckverfahrens (also eines FDM-3D-Verfahrens) zur Herstellung eines 3D-Grünkörpers eingesetzt, wobei das auf einer Spule aufgewickelte Filament in einen 3D-Druckkopf geführt wird, wo es über die Schmelztemperatur erhitzt wird und es in erhitztem/geschmolzenem Zustand schichtweise in den 3D-Grünkörper verwandelt wird. In diesem Verfahren können beliebige 3D-Drucker eingesetzt werden, die sich zur Durchführung eines FDM-3D-Druckverfahrens eignen.

WO 2018/097954 offenbart spezielle 3D-Drucker, die über eine spezielle Vorrichtung zur Druckkontrollierung/Drucksteuerung verfügen. Die darin offenbarten 3D-Printer eignen sich insbesondere für die Herstellung von 3D-Druckprodukten durch Stereolithographie (SLA-3D-Druckverfahren). Als Einsatzmaterial wird ein flüssiges Harz verwendet, das durch Licht härtbar ist.

WO 2018/125555 offenbart weitere 3D-Drucker, die über einen speziellen Silo zur Handhabung von Pulver verfügen. Diese Art von 3D-Drucker lässt sich insbesondere in selektiven Laserschmelzverfahren (SLM-3D-Druckverfahren) einsetzen.

Die der vorliegenden Erfindung zugrunde liegende Aufgabe besteht in der Bereitstellung von neuen 3D-Druckern, insbesondere von 3D-Druckern, die im Rahmen eines 3D-Extrusionsdruckverfahrens eingesetzt werden können.

Gelöst wird die Aufgabe durch einen 3D-Drucker (1) umfassend
- ein Gehäuse (2),
- mindestens einen Druckkopf (10),
- mindestens eine erste Antriebseinheit (20) zur Steuerung des Druckkopfs (10),
- mindestens ein Gegengewicht (30),
- mindestens eine zweite Antriebseinheit (40) zur Steuerung des Gegengewichts (30),
wobei das Gegengewicht (30) und der Druckkopf (10) spiegelbildlich zueinander innerhalb des Gehäuses (2) des 3D-Druckers (1) bewegt werden.

Die erfindungsgemäßen 3D-Drucker sind vorteilhaft, weil dadurch die Druckgenauigkeit und/oder die Druckgeschwindigkeit gegenüber bekannten 3D-Druckern, insbesondere solchen, die in 3D-Extrusionsdruckverfahren, vorzugsweise in 3D-Schmelzschichtdruckverfahren (FDM-3D-Drucktechnik), eingesetzt werden, verbessert und/oder erhöht wird. Erfindungsgemäß wird dies durch einen beweglichen Druckmechanismus erzielt, bei dem sich ein Gegengewicht prinzipiell gegensätzlich, das heißt spiegelbildlich, insbesondere in Form einer Punktspiegelung, zur Position und Bewegung des eigentlichen Druckmechanismus (Druckkopf) bewegt.

Bei herkömmlichen 3D-Druckern ist insbesondere problematisch, dass durch das Eigengewicht des Druckkopfes als solchen bei jeder Bewegung und/oder bei jedem Bremsvorgang des Druckkopfes bzw. einer Richtungsänderung des Druckkopfes der Druckkopf selbst sowie die damit verbunden Komponenten in Schwingungen versetzt werden. Dadurch wird eine möglichst genaue Positionierung des Druckkopfes erschwert, was in der Regel mit Qualitätseinbußen beim hergestellten 3D-Druckobjekt verbunden ist. In konventionellen 3D-Druckern wird das Schwingungsproblem in der Regel dadurch angegangen, dass die Bewegungsgeschwindigkeit des Druckkopfes minimiert wird, was wiederum nachteilig für die Dauer des Druckprozesses ist. Weiterhin werden teilweise umständliche Wege zur Steuerung des Druckkopfes durchgeführt, um dadurch eine Schwingungsreduktion zu ermöglichen.

Die erfindungsgemäßen 3D-Drucker sind jedoch so konzipiert, dass die beim Druckvorgang auftretenden Schwingungen durch ein Gegengewicht, das sich spiegelbildlich zum Druckkopf bewegt, weitgehend, vorzugsweise vollständig, minimiert sind. Dadurch wird eine höhere Genauigkeit bei der Positionierung des Druckkopfes und/oder eine höhere Bewegungsgeschwindigkeit des Druckkopfes erzielt.

Im Rahmen der vorliegenden Erfindung beziehen sich (soweit nicht anders angegeben) alle Richtungsangaben, wie X-Richtung, Y-Richtung oder Z-Richtung sowie XY-Ebene, auf ein kartesisches Koordinatensystem im dreidimensionalen Raum. Dies bedeutet, dass die drei Richtungsachsen (X-Achse, Y-Achse und Z-Achse) jeweils orthogonal zueinander stehen, also jeweils einen 90°-Winkel zueinander ausbilden. Die Z-Achse (Z-Richtung) wird auch als "vertikale Achse" bezeichnet. XY-Ebenen können auch als horizontale Ebenen bezeichnet werden, wobei mehrere XY-Ebenen in vertikaler Richtung (also entlang der Z-Achse) parallel zueinander angeordnet sein können. Bewegungen entlang der Z-Achse können auch als "nach oben" bzw. "nach unten" bezeichnet werden.

Der Begriff "spiegelbildlich" im Rahmen der vorliegenden Erfindung bedeutet, dass die Position eines ersten Gegenstandes durch eine Symmetrieoperation auf die Position eines zweiten Gegenstandes abgebildet/gespiegelt werden kann. Eine solche Symmetrieoperation kann beispielsweise in Form einer Spiegelung an einer Ebene (Ebenenspiegelung) oder anhand einer Spiegelung an einem Punkt (Punktspiegelung) durchgeführt werden. Vorzugsweise werden im Rahmen der vorliegenden Erfindung unter dem Begriff "spiegelbildlich" Punktspiegelungen verstanden. Demzufolge bedeutet der Begriff "spiegelbildliche Bewegung" im Rahmen der vorliegenden Erfindung, dass ein erster und ein zweiter Gegenstand sich so zueinander bewegen, dass die jeweilige Bewegungsposition des ersten Gegenstandes während der Bewegung durch die vorgenannte Symmetrieoperation in die entsprechende Bewegungsposition des zweiten Gegenstandes überführt/gespiegelt werden kann. Die beiden Gegenstände (im Rahmen der vorliegenden Erfindung vorzugsweise das Gegengewicht (30) und der Druckkopf (10)) bewegen sich somit in Bezug auf das dreidimensionale kartesische Koordinatensystem (dreidimensionaler Bewegungsraum innerhalb des 3D-Druckers) spiegelbildlich zueinander entsprechend der vorgenannten Symmetrieoperation, beispielsweise in Form einer Spiegelung um eine Spiegelebene, vorzugsweise in Form einer Punktspiegelung um einen Spiegelpunkt. Bei einer Punktspiegelung bewegen sich die beiden zu betrachtenden Gegenstände (Druckkopf einerseits sowie Gegengewicht andererseits) also genau entgegengesetzt in Bezug auf den dreidimensionalen Bewegungsraum.

Nachfolgend wird der erfindungsgemäße 3D-Drucker näher definiert.

Ein erster Gegenstand der vorliegenden Erfindung ist ein 3D-Drucker (1) umfassend
- ein Gehäuse (2),
- mindestens einen Druckkopf (10),
- mindestens eine erste Antriebseinheit (20) zur Steuerung des Druckkopfs (10),
- mindestens ein Gegengewicht (30),
- mindestens eine zweite Antriebseinheit (40) zur Steuerung des Gegengewichts (30),
wobei das Gegengewicht (30) und der Druckkopf (10) spiegelbildlich zueinander innerhalb des Gehäuses (2) des 3D-Druckers (1) bewegt werden.

3D-Drucker als solche sind dem Fachmann bekannt. Im Rahmen der vorliegenden Erfindung kann prinzipiell jeder beliebige und/oder kommerziell erhältliche 3D-Drucker eingesetzt werden, wobei der Apparat technisch so umgebaut und/oder modifiziert wird, dass sämtliche der vorstehend genannten Merkmale im entsprechenden 3D-Drucker verwirklicht sind. Beispielsweise sind dem Fachmann Druckköpfe als solche sowie Antriebseinheiten bzw. Steuereinheiten als solche ebenfalls bekannt. Im erfindungsgemäßen 3D-Drucker können (wie nachstehend aufgezeigt) auch noch weitere Vorrichtungselemente optional enthalten sein. Beispiele für im Rahmen der vorliegenden Erfindung vom Prinzip her einsetzbaren 3D-Drucker und/oder entsprechende darin enthaltene (optionale) Vorrichtungselemente können beispielsweise US-A 2018/0056608 entnommen werden. Im Rahmen der vorliegenden Erfindung müssen im erfindungsgemäßen 3D-Drucker jedoch die darin enthaltenen Vorrichtungselemente so angeordnet werden, dass während des bestimmungsgemäßen Betriebes (also während des 3D-Druckprozesses) die im 3D-Drucker enthaltenen Vorrichtungselemente, wie beispielsweise Motoren, Leitungen oder Befestigungselemente wie Gestänge etc., mit dem Gegengewicht (30) und/oder dem Druckkopf (10), während deren zueinander spiegelbildlich durchgeführten Bewegung, nicht zu einer Kollision führen.

Der erfindungsgemäße 3D-Drucker (1) enthält mindestens einen Druckkopf (10). Erfindungsgemäß können also auch zwei, drei oder noch mehr Druckköpfe im 3D-Drucker (1) enthalten sein. Geeignete Druckköpfe als solche sind beispielsweise in US 2018/0056608 A1 offenbart. Sofern im erfindungsgemäßen 3D-Drucker (1) mehr als zwei Druckköpfe (10) enthalten sind, können diese Druckköpfe miteinander gekoppelt sein oder auch vollständig unabhängig voneinander bewegt werden. Zur Bewegung/Steuerung des mindestens einen Druckkopfs (10) wird erfindungsgemäß mindestens eine erste Antriebseinheit (20) eingesetzt. Diese erste Antriebseinheit (20) ist vorzugsweise ein Motor. Erfindungsgemäß ist es bevorzugt, dass sich eine solche erste Antriebseinheit (20) aus mehreren einzelnen Einheiten zusammensetzt, vorzugsweise Motoren, die jeweils eine Steuerung des Druckkopfes in die X- und/oder Y-Richtung und/oder Z-Richtung des entsprechenden Druckkopfes (10) innerhalb des Gehäuses (2) des 3D-Druckers (1) ermöglichen. Sofern erfindungsgemäß zwei oder mehr Druckköpfe (10) eingesetzt werden, können diese gegebenenfalls über separate Antriebseinheiten (20) verfügen.

Der erfindungsgemäße 3D-Drucker (1) enthält mindestens ein Gegengewicht (30), das als solches dem Fachmann bekannt ist. Als Gegengewicht (30) lassen sich prinzipiell alle dem Fachmann bekannten Gegenstände/Vorrichtungen einsetzen, die über ein definiertes Gewicht verfügen und/oder mit denen sich ein definiertes Gewicht fest und/oder variabel einstellen lässt. Erfindungsgemäß können auch zwei oder mehr Gegengewichte (30) eingesetzt werden. Vorzugsweise entspricht die Anzahl der Gegengewichte (30) im erfindungsgemäßen 3D-Drucker (1) der Anzahl der Druckköpfe (10). Sofern beispielsweise zwei Druckköpfe (10) vorhanden sind, ist es erfindungsgemäß bevorzugt, dass auch zwei Gegengewichte (30) vorhanden sind. Sinngemäß wie vorstehend für die Druckköpfe (10) beschrieben, können auch im Fall von zwei oder mehr Gegengewichten (30) die jeweiligen Gegengewichte zusammen oder getrennt voneinander gesteuert werden. Erfindungsgemäß enthält der 3D-Drucker (1) mindestens eine zweite Antriebseinheit (40) zur Steuerung des mindestens einen Gegengewichts (30). Sind beispielsweise zwei Gegengewichte (30) im erfindungsgemäßen 3D-Drucker (1) enthalten, so verfügt vorzugsweise jedes von diesen Gegengewichten (30) über eine separate Antriebseinheit (40).

Im erfindungsgemäßen 3D-Drucker (1) sind die darin enthaltenen Vorrichtungselemente, wie der mindestens eine Druckkopf (10), die mindestens eine erste Antriebseinheit (20), das mindestens eine Gegengewicht (30) sowie die mindestens eine zweite Antriebseinheit (40), vorzugsweise durch geeignete Vorrichtungselemente, insbesondere durch Gestänge, an das Gehäuse (2) des 3D-Druckers (1) befestigt bzw. mit diesem verbunden. Entsprechende Befestigungselemente sind dem Fachmann bekannt. Vorzugsweise ist eine solche Befestigungsvorrichtung ein Gestänge, mehr bevorzugt ist das Gestänge aus Metall hergestellt, insbesondere aus Aluminium.

Weiterhin ist es im erfindungsgemäßen 3D-Drucker (1) bevorzugt, dass der 3D-Drucker (1) ein Gestänge umfasst und über das Gestänge die erste Antriebseinheit (20), die zweite Antriebseinheit (40), das Gegengewicht (30) und der Druckkopf (10) miteinander verbunden sind.

Ebenso ist es erfindungsgemäß bevorzugt, dass im 3D-Drucker (1)
i) die erste Antriebseinheit (20) mindestens einen Motor zur Steuerung des Druckkopfes (10) in X- und/oder Y-Richtung innerhalb des Gehäuses (2) des 3D-Druckers (1) enthält, vorzugsweise mindestens einen Motor (21) zur Steuerung des Druckkopfes (10) in X-Richtung und mindestens einen Motor (22) zur Steuerung des Druckkopfes (10) in Y-Richtung (jeweils bezogen auf ein kartesisches Koordinatensystem) innerhalb des Gehäuses (2) des 3D-Druckers (1), und/oder
ii) in das Gehäuse des Druckkopfes (10) ein Motor (21) integriert ist, wobei der Motor (21) Bestandteil der ersten Antriebseinheit (20) ist und zur Steuerung des Druckkopfes (10) in X-Richtung (bezogen auf ein kartesisches Koordinatensystem) innerhalb des Gehäuses (2) des 3D-Druckers (1) dient, und/oder
iii) die zweite Antriebseinheit (40) mindestens einen Motor zur Steuerung des Gegengewichts (30) in X- und/oder Y-Richtung innerhalb des Gehäuses (2) des 3D-Druckers (1) enthält, vorzugsweise mindestens einen Motor (41) zur Steuerung des Gegengewichts (30) in X-Richtung und mindestens einen Motor (42) zur Steuerung des Gegengewichts (30) in Y-Richtung (jeweils bezogen auf ein kartesisches Koordinatensystem) innerhalb des Gehäuses (2) des 3D-Druckers (1), und/oder
iv) in das Gehäuse des Gegengewichts (30) ein Motor (41) integriert ist, wobei der Motor (41) Bestandteil der zweiten Antriebseinheit (40) ist und zur Steuerung des Gegengewichts (30) in X-Richtung (bezogen auf ein kartesisches Koordinatensystem) innerhalb des Gehäuses (2) des 3D-Druckers (1) dient.

Die vorgenannten Optionen i) bis iv) können in den erfindungsgemäßen 3D-Druckern (1) unabhängig voneinander eingestellt werden. Vorzugsweise sind alle vier Optionen i) bis iv) gleichzeitig erfüllt. Auf diese Weise lässt sich eine Steuerung des mindestens einen Druckkopfs (10) sowie des entsprechenden mindestens einen Gegengewichts (30) in X- und/oder Y-Richtung problemlos und auf einfache Weise ermöglichen. Eine Steuerung dieser Vorrichtungselemente in Z-Richtung ist jedoch nicht zwingend erforderlich. Vorzugsweise ist in den erfindungsgemäßen 3D-Druckern (1) auch eine Steuerung der vorgenannten Vorrichtungselemente in Z-Richtung möglich.

Sofern eine Steuerung der vorgenannten Vorrichtungselemente in Z-Richtung erfolgen soll, ist es weiterhin bevorzugt, dass in den erfindungsgemäßen 3D-Druckern (1)
i) die erste Antriebseinheit (20) mindestens einen zusätzlichen Motor (23) enthält zur Steuerung des Druckkopfes (10) in Z-Richtung (bezogen auf ein kartesisches Koordinatensystem) innerhalb des Gehäuses (2) des 3D-Druckers (1), und/oder
ii) die zweite Antriebseinheit (40) mindestens einen zusätzlichen Motor (43) enthält zur Steuerung des Gegengewichts (30) in Z-Richtung (bezogen auf ein kartesisches Koordinatensystem) innerhalb des Gehäuses (2) des 3D-Druckers (1).

Prinzipiell können die erfindungsgemäßen 3D-Drucker (1) in beliebigen, dem Fachmann bekannten 3D-Drucktechniken (siehe auch im einleitenden Teil der vorliegenden Erfindung) eingesetzt werden. In diesem Zusammenhang wird darauf hingewiesen, dass die Auswahl an im erfindungsgemäßen 3D-Drucker (1) enthaltenen zusätzlichen Vorrichtungselementen maßgeblich auch durch die gewünschte 3D-Drucktechnik bestimmt wird. Einem Fachmann ist es somit bekannt, welche zusätzlichen Vorrichtungselemente in einem (konventionellen) 3D-Drucker zwingend oder optional vorhanden sind, um den gewünschten 3D-Druckprozess, wie beispielsweise ein FDM-/FFF-Verfahren oder auch sonstige Verfahren, wie ein SRA-3D-Druckverfahren durchzuführen.

Erfindungsgemäß ist es bevorzugt, dass der 3D-Drucker (1) ein Extrusionsdrucker ist, insbesondere ein Extrusionsdrucker zur Durchführung eines 3D-Schmelzschichtdruckverfahrens (FDM-3D-Drucktechnik), und/oder dass der Druckkopf (10) eine Extrusionsdüse, eine Heiz- oder Aufschmelzeinheit, ein Mischelement und/oder einen Filamenteinlass aufweist.

Geeignete sonstige Vorrichtungselemente, die in den erfindungsgemäßen 3D-Druckern (1) enthalten sein können, sind beispielsweise Grundplatten/Träger, auf denen das 3D-Produkt als solches während des Druckvorganges aufgebracht wird, Isolierungen, beispielsweise auch rotierbare Isolierungen wie in DE-A 10 2015 111677 beschrieben, Bedienelemente und/oder Schutzvorrichtungen wie Glasfenster. Darüber hinaus können auch geeignete Zuleitungen, insbesondere zum Druckkopf und/oder Lagerbehältnisse für das zu druckende 3D-Material innerhalb oder außerhalb der erfindungsgemäßen 3D-Drucker (1) enthalten sein.

Als sonstige Vorrichtungselemente ist es erfindungsgemäß bevorzugt, dass
i) der 3D-Drucker (1) zusätzlich eine Grundplatte (70) enthält, wobei das 3D-Druckprodukt während des 3D-Druckvorgangs auf eine Oberfläche der Grundplatte (70) aufgedruckt wird, und/oder
ii) der 3D-Drucker (1) mindestens ein weiteres Vorrichtungselement enthält, ausgewählt aus Isolierungen, Bedienelemente und/oder Schutzvorrichtungen, insbesondere Glasfenster, und/oder
iii) das Gestänge aus Metall hergestellt ist, insbesondere aus Aluminium, und/oder
iv) der 3D-Drucker (1) mit mindestens einer Vorrichtung (80) zur Aufnahme von Filamenten (81) verbunden ist, wobei sich die Vorrichtung (80) innerhalb oder außerhalb des Gehäuses (2) des 3D-Druckers (1) befinden kann.

In einer bevorzugten Ausführungsform der vorliegenden Erfindung ist der 3D-Drucker (1) derart ausgestaltet, dass
i) der Druckkopf (10) und die erste Antriebseinheit (20) unter Verwendung von Gestänge so miteinander verbunden sind, dass der Druckkopf (10) während des 3D-Druckvorgangs in einer ersten XY-Ebene (50) (bezogen auf ein kartesisches Koordinatensystem) innerhalb des Gehäuses (2) des 3D-Druckers (1) bewegt wird, und
ii) das Gegengewicht (30) und die zweite Antriebseinheit (40) unter Verwendung von Gestänge so miteinander verbunden sind, dass das Gegengewicht (30) während des 3D-Druckvorgangs in einer zweiten XY-Ebene (60) (bezogen auf ein kartesisches Koordinatensystem) innerhalb des Gehäuses (2) des 3D-Druckers (1) bewegt wird, wobei die erste XY-Ebene (50) und die zweite XY-Ebene (60) parallel zueinander in Z-Richtung angeordnet sind.

Weiterhin ist es bevorzugt, dass
i) die erste XY-Ebene (50) und die zweite XY-Ebene (60) einen festen Abstand a in Z-Richtung (jeweils bezogen auf ein kartesisches Koordinatensystem) innerhalb des Gehäuses (2) des 3D-Druckers (1) aufweisen, wobei sich die erste XY-Ebene (50) in Z-Richtung unterhalb der zweiten XY-Ebene (60) befindet, vorzugsweise beträgt der Abstand a 5 bis 20 cm, und/oder
ii) die Grundplatte (70) in einer dritten XY-Ebene (65) innerhalb des Gehäuses (2) des 3D-Druckers (1) ausgerichtet ist, wobei sich die dritte XY-Ebene (65) in Z-Richtung unterhalb der ersten XY-Ebene (50) befindet, und die Grundplatte (70) mittels einer dritten Antriebseinheit (45) während des 3D-Druckvorgangs in Z-Richtung (jeweils bezogen auf ein kartesisches Koordinatensystem) schrittweise innerhalb des Gehäuses (2) des 3D-Druckers (1) bewegt wird. Bewegen bedeutet, dass die Grundplatte (70) abgesenkt oder angehoben wird, vorzugsweise wird sie abgesenkt.

Alternativ ist es bevorzugt, dass
i) die erste XY-Ebene (50) und die zweite XY-Ebene (60) einen beweglichen Abstand b in Z-Richtung (jeweils bezogen auf ein kartesisches Koordinatensystem) innerhalb des Gehäuses (2) des 3D-Druckers (1) aufweisen, wobei sich die erste XY-Ebene (50) in Z-Richtung unterhalb der zweiten XY-Ebene (60) befindet, vorzugsweise beträgt der Abstand b 5 bis 20 cm, und/oder
ii) die Grundplatte (70) in einer dritten XY-Ebene (65) innerhalb des Gehäuses (2) des 3D-Druckers (1) ausgerichtet ist, wobei sich die dritte XY-Ebene (65) in Z-Richtung unterhalb der ersten XY-Ebene (50) befindet, und die Grundplatte (70) 1) fest ist oder 2) mittels einer dritten Antriebseinheit (45) während des 3D-Druckvorgangs in Z-Richtung (jeweils bezogen auf ein kartesisches Koordinatensystem) schrittweise innerhalb des Gehäuses (2) des 3D-Druckers (1) abgesenkt oder angehoben wird, vorzugsweise abgesenkt wird, besonders bevorzugt ist die Grundplatte (70) fest.

Die in den beiden vorgenannten bevorzugten Ausführungsformen angegebenen konkreten Zahlenwerte für den Abstand a bzw. den Abstand b von jeweils 5 bis 20 cm beziehen sich auf gängige 3D-Drucker. Letztendlich können diese Zahlenwerte in der Praxis auch deutlich abweichen, sofern die eingesetzten 3D-Drucker beispielsweise viel größere Dimensionierungen als normale handelsübliche 3D-Drucker aufweisen, beispielsweise um sehr große 3D-Objekte drucken zu können. Ein Fachmann weiß, wie er die vorgegebenen Abstände a und/oder b auf den konkreten Drucker bezogen konkret einstellen/bestimmen kann.

In einer besonders bevorzugten Ausführungsform der vorliegenden Erfindung ist der 3D-Drucker (1) derart ausgestaltet, dass die zueinander spiegelbildliche Bewegung des Gegengewichts (30) und des Druckkopfes (10) durch Punktspiegelung erfolgt, wobei der Spiegelpunkt in einer vierten XY-Ebene (75) liegt, die sich auf halbem Abstand in Z-Richtung zwischen der ersten XY-Ebene (50) und der zweiten XY-Ebene (60) (jeweils bezogen auf ein kartesisches Koordinatensystem) innerhalb des Gehäuses (2) des 3D-Druckers (1) befindet.

In einer weiteren Ausführungsform der vorliegenden Erfindung ist ein 3D-Drucker (1) bevorzugt, wobei
i) der 3D-Drucker (1) mindestens zwei Druckköpfe (10), vorzugsweise zwei Druckköpfe (10), enthält, wobei die mindestens zwei Druckköpfe (10) fest miteinander gekoppelt sind oder unabhängig voneinander betrieben werden, und/oder
ii) der 3D-Drucker (1) mindestens zwei Gegengewichte (30), vorzugsweise zwei Gegengewichte (30), enthält, wobei die mindestens zwei Gegengewichte (30) fest miteinander gekoppelt sind oder unabhängig voneinander betrieben werden.

Weiterhin ist es bei den erfindungsgemäßen 3D-Druckern (1) bevorzugt, dass
i) das Gewicht des Gegengewichts fest ist und das Gewichtsverhältnis des Gegengewichts (30) zum Druckkopf (10) im Bereich von 80:100 bis 120:100 [%/%] liegt, bevorzugt im Bereich von 90:100 bis 110:100 [%/%], insbesondere beträgt es genau 100:100 [%/%], und/oder
ii) das Gewicht des Gegengewichts (30) und das Gewicht des Druckkopfes (10) fest sind, oder
iii) das Gewicht des Gegengewichts (30) variabel ist, vorzugsweise wird das Gewicht des Gegengewichts (30) durch Zuführen oder Abführen einer Flüssigkeit, insbesondere durch hydraulisches Öl eingestellt.

In diesem Zusammenhang wird darauf hingewiesen, dass es erfindungsgemäß nicht erforderlich ist, dass (ohne Berücksichtigung der jeweiligen Antriebseinheit) das jeweilige Gewicht eines Druckkopfs (10) in einem genauen, vorher festgelegten Verhältnis zum entsprechenden Gewicht des Gegengewichts (30) stehen muss. Insbesondere ist es nicht erforderlich, dass das Gegengewicht (30) exakt oder weitgehend das gleiche Gewicht aufweisen muss wie der Druckkopf (10). Insbesondere wenn (sehr) schnell gedruckt werden soll, sind die Ausführungsformen von Vorteil, bei denen das mindestens eine Gegengewicht (30) variabel eingestellt werden kann. Sofern das Gegengewicht variabel eingestellt werden soll, ist hierbei die Verwendung eines hydraulischen Füllmechanismus von Vorteil.

Die Steuerung des 3D-Druckers (1) bzw. der darin enthaltenen Vorrichtungselemente, wie Druckkopf und/oder das Gegengewicht, erfolgt in der Praxis in der Regel rechnergesteuert. Demzufolge ist es erfindungsgemäß bevorzugt, dass der 3D-Drucker (1) mit mindestens einem Computer (3) gesteuert wird, vorzugsweise unter Verwendung von mindestens einer Slicersoftware. Die Slicersoftware als solche, die insbesondere zur konkreten Ausgestaltung des 3D-Druckvorgangs eingesetzt wird, ist dem Fachmann bekannt und kommerziell erhältlich.

Weiterhin ist es bevorzugt, dass mindestens ein Computer (3) eingesetzt wird, um
i) das Gegengewicht (30) und den Druckkopf (10) spiegelbildlich zueinander innerhalb des Gehäuses (2) des 3D-Druckers (1) zu bewegen, und/oder
ii) das Gewichtsverhältnis des Gegengewichts (3) zum Druckkopf (10) einzustellen und/oder zu kontrollieren.

Ein weiterer Gegenstand der vorliegenden Erfindung ist die Verwendung eines 3D-Druckers (1) gemäß den vorstehenden Ausführungen in einem 3D-Druckverfahren zur Herstellung eines 3D-Druckprodukts, bevorzugt in einem 3D-Extrusionsdruckverfahren, insbesondere in einem 3D-Schmelzschichtdruckverfahren (FDM-3D-Drucktechnik).

Ein weiterer Gegenstand der vorliegenden Erfindung ist ein Verfahren zur Herstellung von mindestens einem 3D-Druckprodukt unter Verwendung des vorstehend beschriebenen 3D-Druckers (1). Verfahren zur Herstellung eines solchen 3D-Druckproduktes als solchem sind dem Fachmann bekannt. Vorzugsweise handelt es sich bei dem Verfahren um ein 3D-Extrusionsdruckverfahren, insbesondere um ein 3D-Schmelzschichtdruckverfahren (FDM-3D-Drucktechnik).

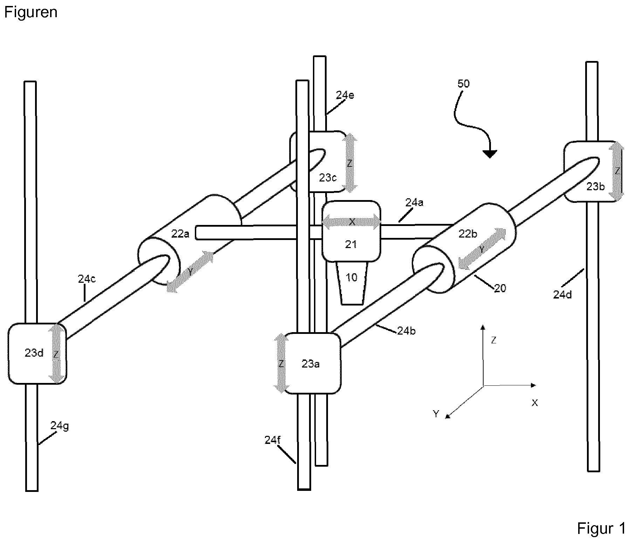

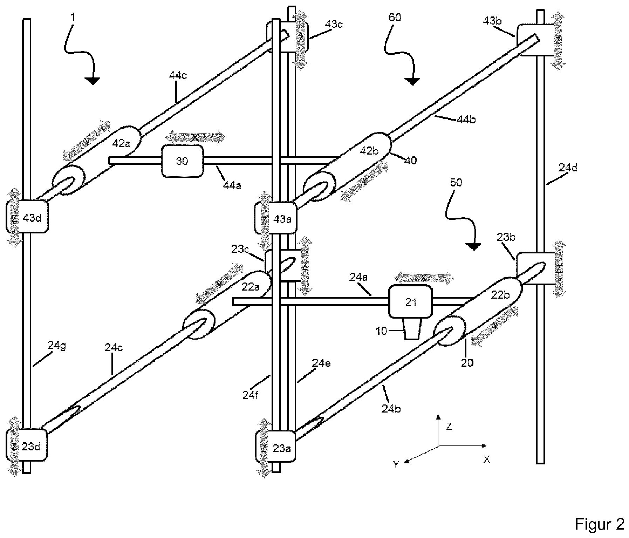

Der erfindungsgemäße 3D-Drucker wird nachfolgend anhand der Figuren verdeutlicht. Figur 1 zeigt einen 3D-Drucker gemäß dem Stand der Technik, während eine bevorzugte Ausführungsform des erfindungsgemäßen 3D-Druckers in Figur 2 dargestellt ist. Im Zusammenhang mit den nachfolgenden Figuren beziehen sich alle Angaben wie X-, Y- oder Z-Richtung bzw. XY-Ebene auf ein kartesisches Koordinatensystem (soweit nicht anders aufgeführt).

Wie aus dem Vergleich der Figuren 1 und 2 ersichtlich, unterscheidet sich der erfindungsgemäße 3D-Drucker (1) gemäß Figur 2 von einem entsprechenden 3D-Drucker des Standes der Technik gemäß Figur 1 vordergründig dahingehend, dass im erfindungsgemäßen 3D-Drucker (1) ein zusätzliches Gegengewicht (30) vorhanden ist, das durch eine zweite Antriebseinheit (40) gesteuert wird. Das Gegengewicht (30) und die zweite Antriebseinheit (40) sind unter Verwendung von Gestänge so miteinander verbunden, dass sie gemeinsam eine zweite XY-Ebene (60) ausbilden. In anderen Worten ausgedrückt bedeutet dies, dass das Gegengewicht (30) während des 3D-Druckvorgangs innerhalb der zweiten XY-Ebene (60) bewegt wird. Das Gewicht des Gegengewichts (30) kann fest oder variabel sein, beispielsweise kann das Gewicht des Gegengewichts (30) über einen hydraulischen Füllmechanismus eingestellt bzw. kontrolliert werden.

Der in Figur 1 dargestellte 3D-Drucker gemäß dem Stand der Technik sowie der in Figur 2 dargestellte 3D-Drucker gemäß der speziellen Ausführungsform der vorliegenden Erfindung stimmen jedoch hinsichtlich der ersten XY-Ebene (50) überein, die durch den Druckkopf (10) und die erste Antriebseinheit (20) unter Verwendung von Gestänge ausgebildet wird. In anderen Worten ausgedrückt bedeutet dies, dass der Druckkopf (10) während des 3D-Druckvorgangs innerhalb der ersten XY-Ebene (50) unter Verwendung der ersten Antriebseinheit (20) bewegt wird.

Die erste Antriebseinheit umfasst in beiden Figuren einen Motor (21) zur Steuerung des Druckkopfes (10) in X-Richtung und zwei Motoren (22a und 22b) zur Steuerung des Druckkopfes (10) in Y-Richtung (jeweils bezogen auf ein kartesisches Koordinatensystem). Das Gestänge in XY-Richtung (24a bis 24c) wird vorzugsweise aus Aluminium hergestellt. Über das Gestänge sind die Motoren sowie der Druckkopf befestigt, wodurch eine Bewegung des Druckkopfes (10) in der ersten XY-Ebene (50) während des 3D-Druckvorganges innerhalb des Gehäuses (2) des 3D-Druckers (1) ermöglicht wird.

In Z-Richtung (bezogen auf ein kartesisches Koordinatensystem) ist das Gestänge durch die Bezugszeichen (24d bis 24g) dargestellt. Wie aus beiden Figuren 1 und 2 ersichtlich, können zusätzliche Motoren (23a bis 23d) vorhanden sein, die eine Bewegung des gesamten Aufbaus, der die erste XY-Ebene (50) ausbildet, also der Druckkopf (10), die erste Antriebseinheit (20) sowie die dazugehörigen Motoren und das Gestänge, in Z-Richtung ermöglichen. Dies ist sowohl im Stand der Technik als auch im Rahmen der vorliegenden Erfindung jedoch nur eine optionale Ausgestaltung.

Im Rahmen des erfindungsgemäßen 3D-Druckers (1) gemäß Figur 2 ist die vorstehend bereits beschriebene zweite XY-Ebene (60), die vom Gegengewicht (30) sowie der zugehörigen zweiten Antriebseinheit (40) sowie dem zugehörigen Gestänge ausgebildet wird, ebenfalls mit dem in Z-Richtung ausgebildeten Gestänge (24d bis 24g) verbunden. Weiterhin sind in dieser Ausführungsform optional vier zusätzliche Motoren (43a bis 43d) enthalten, die es ermöglichen, die vom Gegengewicht (30) sowie der zweiten Antriebseinheit (40) in Verbindung mit dem zugehörigen Gestänge (44a bis 44c) ausgebildete zweite XY-Ebene (60) in Z-Richtung zu bewegen. In dieser Ausführungsform wird die zweite Antriebseinheit (40) durch zwei Motoren (42a) und (42b) zur Steuerung des Gegengewichtes in Y-Richtung ausgebildet. Weiterhin ist im Gegengewicht (30) ein weiterer Motor (41) enthalten (in der Anmeldung nicht dargestellt), der eine Steuerung des Gegengewichts (30) in X-Richtung ermöglicht.

Wie aus Figur 2 ersichtlich, befindet sich das Gegengewicht (30) in spiegelbildlicher Position zum Druckkopf (10). Das Spiegelbild wird in dieser Ausführungsform dadurch erhalten, dass eine Punktspiegelung vorliegt, wobei der Spiegelpunkt in einer vierten XY-Ebene (75) liegt, die sich auf halbem Abstand in Z-Richtung zwischen der ersten XY-Ebene (50) und der zweiten XY-Ebene (60) innerhalb des Gehäuses (2) des 3D-Druckers (1) befindet.

## Patentansprüche

1. 3D-Drucker (1) umfassend
- ein Gehäuse (2),
- mindestens einen Druckkopf (10),
- mindestens eine erste Antriebseinheit (20) zur Steuerung des Druckkopfs (10),
- mindestens ein Gegengewicht (30),
- mindestens eine zweite Antriebseinheit (40) zur Steuerung des Gegengewichts (30),
wobei das Gegengewicht (30) und der Druckkopf (10) spiegelbildlich zueinander innerhalb des Gehäuses (2) des 3D-Druckers (1) bewegt werden.

2. 3D-Drucker (1) gemäß Anspruch 1, **dadurch gekennzeichnet, dass** der 3D-Drucker (1) ein Gestänge umfasst und über das Gestänge die erste Antriebseinheit (20), die zweite Antriebseinheit (40), das Gegengewicht (30) und der Druckkopf (10) miteinander verbunden sind.

3. 3D-Drucker (1) gemäß Anspruch 1 oder 2, **dadurch gekennzeichnet, dass**
i) die erste Antriebseinheit (20) mindestens einen Motor zur Steuerung des Druckkopfes (10) in X- und/oder Y-Richtung innerhalb des Gehäuses (2) des 3D-Druckers (1) enthält, vorzugsweise mindestens einen Motor (21) zur Steuerung des Druckkopfes (10) in X-Richtung und mindestens einen Motor (22) zur Steuerung des Druckkopfes (10) in Y-Richtung (jeweils bezogen auf ein kartesisches Koordinatensystem) innerhalb des Gehäuses (2) des 3D-Druckers (1), und/oder
ii) in das Gehäuse des Druckkopfes (10) ein Motor (21) integriert ist, wobei der Motor (21) Bestandteil der ersten Antriebseinheit (20) ist und zur Steuerung des Druckkopfes (10) in X-Richtung (bezogen auf ein kartesisches Koordinatensystem) innerhalb des Gehäuses (2) des 3D-Druckers (1) dient, und/oder
iii) die zweite Antriebseinheit (40) mindestens einen Motor zur Steuerung des Gegengewichts (30) in X- und/oder Y-Richtung innerhalb des Gehäuses (2) des 3D-Druckers (1) enthält, vorzugsweise mindestens einen Motor (41) zur Steuerung des Gegengewichts (30) in X-Richtung und mindestens einen Motor (42) zur Steuerung des Gegengewichts (30) in Y-Richtung (jeweils bezogen auf ein kartesisches Koordinatensystem) innerhalb des Gehäuses (2) des 3D-Druckers (1), und/oder
iv) in das Gehäuse des Gegengewichts (30) ein Motor (41) integriert ist, wobei der Motor (41) Bestandteil der zweiten Antriebseinheit (40) ist und zur Steuerung des Gegengewichts (30) in X-Richtung (bezogen auf ein kartesisches Koordinatensystem) innerhalb des Gehäuses (2) des 3D-Druckers (1) dient.

4. 3D-Drucker (1) gemäß Anspruch 3, **dadurch gekennzeichnet, dass**
i) die erste Antriebseinheit (20) mindestens einen zusätzlichen Motor (23) enthält zur Steuerung des Druckkopfes (10) in Z-Richtung (bezogen auf ein kartesisches Koordinatensystem) innerhalb des Gehäuses (2) des 3D-Druckers (1), und/oder
ii) die zweite Antriebseinheit (40) mindestens einen zusätzlichen Motor (43) enthält zur Steuerung des Gegengewichts (30) in Z-Richtung (bezogen auf ein kartesisches Koordinatensystem) innerhalb des Gehäuses (2) des 3D-Druckers (1).

5. 3D-Drucker (1) gemäß einem der Ansprüche 1 bis 4, **dadurch gekennzeichnet, dass** der 3D-Drucker (1) ein Extrusionsdrucker ist, insbesondere ein Extrusionsdrucker zur Durchführung eines 3D-Schmelzschichtdruckverfahrens (FDM-3D-Drucktechnik), und/oder dass der Druckkopf (10) eine Extrusionsdüse, eine Heiz- oder Aufschmelzeinheit, ein Mischelement und/oder einen Filamenteinlass aufweist.

6. 3D-Drucker (1) gemäß einem der Ansprüche 1 bis 5, **dadurch gekennzeichnet, dass**
i) der 3D-Drucker (1) zusätzlich eine Grundplatte (70) enthält, wobei das 3D-Druckprodukt während des 3D-Druckvorgangs auf eine Oberfläche der Grundplatte (70) aufgedruckt wird, und/oder
ii) der 3D-Drucker (1) mindestens ein weiteres Vorrichtungselement enthält, ausgewählt aus Isolierungen, Bedienelemente und/oder Schutzvorrichtungen, insbesondere Glasfenster, und/oder
iii) das Gestänge aus Metall hergestellt ist, insbesondere aus Aluminium, und/oder
iv) der 3D-Drucker (1) mit mindestens einer Vorrichtung (80) zur Aufnahme von Filamenten (81) verbunden ist, wobei sich die Vorrichtung (80) innerhalb oder außerhalb des Gehäuses (2) des 3D-Druckers (1) befinden kann.

7. 3D-Drucker (1) gemäß einem der Ansprüche 1 bis 6, **dadurch gekennzeichnet, dass**
i) der Druckkopf (10) und die erste Antriebseinheit (20) unter Verwendung von Gestänge so miteinander verbunden sind, dass der Druckkopf (10) während des 3D-Druckvorgangs in einer ersten XY-Ebene (50) (bezogen auf ein kartesisches Koordinatensystem) innerhalb des Gehäuses (2) des 3D-Druckers (1) bewegt wird, und
ii) das Gegengewicht (30) und die zweite Antriebseinheit (40) unter Verwendung von Gestänge so miteinander verbunden sind, dass das Gegengewicht (30) während des 3D-Druckvorgangs in einer zweiten XY-Ebene (60) (bezogen auf ein kartesisches Koordinatensystem) innerhalb des Gehäuses (2) des 3D-Druckers (1) bewegt wird, wobei die erste XY-Ebene (50) und die zweite XY-Ebene (60) parallel zueinander in Z-Richtung angeordnet sind.

8. 3D-Drucker (1) gemäß Anspruch 7, **dadurch gekennzeichnet, dass**
i) die erste XY-Ebene (50) und die zweite XY-Ebene (60) einen festen Abstand a in Z-Richtung (jeweils bezogen auf ein kartesisches Koordinatensystem) innerhalb des Gehäuses (2) des 3D-Druckers (1) aufweisen, wobei sich die erste XY-Ebene (50) in Z-Richtung unterhalb der zweiten XY-Ebene (60) befindet, vorzugsweise beträgt der Abstand a 5 bis 20 cm, und/oder
ii) die Grundplatte (70) in einer dritten XY-Ebene (65) innerhalb des Gehäuses (2) des 3D-Druckers (1) ausgerichtet ist, wobei sich die dritte XY-Ebene (65) in Z-Richtung unterhalb der ersten XY-Ebene (50) befindet, und die Grundplatte (70) mittels einer dritten Antriebseinheit (45) während des 3D-Druckvorgangs in Z-Richtung (jeweils bezogen auf ein kartesisches Koordinatensystem) schrittweise innerhalb des Gehäuses (2) des 3D-Druckers (1) bewegt wird.

9. 3D-Drucker (1) gemäß Anspruch 7, **dadurch gekennzeichnet, dass**
i) die erste XY-Ebene (50) und die zweite XY-Ebene (60) einen beweglichen Abstand b in Z-Richtung (jeweils bezogen auf ein kartesisches Koordinatensystem) innerhalb des Gehäuses (2) des 3D-Druckers (1) aufweisen, wobei sich die erste XY-Ebene (50) in Z-Richtung unterhalb der zweiten XY-Ebene (60) befindet, vorzugsweise beträgt der Abstand b 5 bis 20 cm, und/oder
ii) die Grundplatte (70) in einer dritten XY-Ebene (65) innerhalb des Gehäuses (2) des 3D-Druckers (1) ausgerichtet ist, wobei sich die dritte XY-Ebene (65) in Z-Richtung unterhalb der ersten XY-Ebene (50) befindet, und die Grundplatte (70) 1) fest ist oder 2) mittels einer dritten Antriebseinheit (45) während des 3D-Druckvorgangs in Z-Richtung (jeweils bezogen auf ein kartesisches Koordinatensystem) schrittweise innerhalb des Gehäuses (2) des 3D-Druckers (1) abgesenkt oder angehoben wird, vorzugsweise abgesenkt wird, besonders bevorzugt ist die Grundplatte (70) fest.

10. 3D-Drucker (1) gemäß einem der Ansprüche 7 bis 9, **dadurch gekennzeichnet, dass** die zueinander spiegelbildliche Bewegung des Gegengewichts (30) und des Druckkopfes (10) durch Punktspiegelung erfolgt, wobei der Spiegelpunkt in einer vierten XY-Ebene (75) liegt, die sich auf halbem Abstand in Z-Richtung zwischen der ersten XY-Ebene (50) und der zweiten XY-Ebene (60) (jeweils bezogen auf ein kartesisches Koordinatensystem) innerhalb des Gehäuses (2) des 3D-Druckers (1) befindet.

11. 3D-Drucker (1) gemäß einem der Ansprüche 1 bis 10, **dadurch gekennzeichnet, dass**
i) der 3D-Drucker (1) mindestens zwei Druckköpfe (10), vorzugsweise zwei Druckköpfe (10), enthält, wobei die mindestens zwei Druckköpfe (10) fest miteinander gekoppelt sind oder unabhängig voneinander betrieben werden, und/oder
ii) der 3D-Drucker (1) mindestens zwei Gegengewichte (30), vorzugsweise zwei Gegengewichte (30), enthält, wobei die mindestens zwei Gegengewichte (30) fest miteinander gekoppelt sind oder unabhängig voneinander betrieben werden.

12. 3D-Drucker (1) gemäß einem der Ansprüche 1 bis 11, **dadurch gekennzeichnet, dass**
i) das Gewicht des Gegengewichts fest ist und das Gewichtsverhältnis des Gegengewichts (30) zum Druckkopf (10) im Bereich von 80:100 bis 120:100 [%/%] liegt, bevorzugt im Bereich von 90:100 bis 110:100 [%/%], insbesondere beträgt es genau 100:100 [%/%], und/oder
ii) das Gewicht des Gegengewichts (30) und das Gewicht des Druckkopfes (10) fest sind, oder
iii) das Gewicht des Gegengewichts (30) variabel ist, vorzugsweise wird das Gewicht des Gegengewichts (30) durch Zuführen oder Abführen einer Flüssigkeit, insbesondere durch hydraulisches Öl eingestellt.

13. 3D-Drucker (1) gemäß einem der Ansprüche 1 bis 12, **dadurch gekennzeichnet, dass** der 3D-Drucker (1) mit mindestens einem Computer (3) gesteuert wird, vorzugsweise unter Verwendung von mindestens einer Slicersoftware.

14. 3D-Drucker (1) gemäß Anspruch 13, **dadurch gekennzeichnet, dass** mindestens ein Computer (3) eingesetzt wird, um
i) das Gegengewicht (30) und den Druckkopf (10) spiegelbildlich zueinander innerhalb des Gehäuses (2) des 3D-Druckers (1) zu bewegen, und/oder
ii) das Gewichtsverhältnis des Gegengewichts (3) zum Druckkopf (10) einzustellen und/oder zu kontrollieren.

15. Verwendung eines 3D-Druckers (1) gemäß einem der Ansprüche 1 bis 14 in einem 3D-Druckverfahren zur Herstellung eines 3D-Druckprodukts, bevorzugt in einem 3D-Extrusionsdruckverfahren, insbesondere in einem 3D-Schmelzschichtdruckverfahren (FDM-3D-Drucktechnik).

16. Verfahren zur Herstellung von mindestens einem 3D-Druckprodukt, **dadurch gekennzeichnet, dass** mindestens ein 3D-Drucker (1) gemäß einem der Ansprüche 1 bis 14 eingesetzt wird, vorzugsweise ist das Verfahren ein 3D-Extrusionsdruckverfahren, insbesondere ein 3D-Schmelzschichtdruckverfahren (FDM-3D-Drucktechnik).
